# EUROPÄISCHE PATENTANMELDUNG

(11) **EP 4 712 178 A1**
(43) Veröffentlichungstag der Anmeldung: **18.03.2026**
(21) Anmeldenummer: 24199870.7
(22) Anmeldetag: 11.09.2024
(51) Int. Cl.: H01M 10/04, H01M 10/0587, H01M 50/107, H01M 50/533, H01M 50/548, H01M 50/559, H01M 50/581

(54) **ELEKTROCHEMISCHES ENERGIESPEICHERELEMENT**

(71) Anmelder: VARTA Microbattery GmbH, 73479 Ellwangen Jagst (DE)
(72) Erfinder: Drews, Verena, Giengen 89537 (DE); Frank, Waldemar, 73479 Ellwangen (DE); Kieninger, Dominik, 73492 Rainau (DE); Köder, Philipp, 74424 Bühlertann (DE); Sahin, Umut, 73433 Aalen (DE)
(74) Vertreter: Ostertag & Partner Patentanwälte mbB

(57) **Zusammenfassung**

Ein elektrochemisches Energiespeicherelement (12) weist einen hohlzylindrisch geformten Wickelverbundkörper (10) auf, der eine spiralförmige Struktur aus mindestens zwei spiralförmig um eine Wickelachse gewickelten Elektrodenbändern (14, 24) und mindestens einem zwischen den Elektrodenbändern (14, 24) angeordneten Separatorband (38, 40) aufweist. Der hohlzylindrisch geformte Wickelverbundkörper (10) umfasst zwei endständige Stirnseiten (34, 36), eine umlaufende äußere Verbundkörpermantelfläche (42), und einen axial ausgerichteten Hohlraum (46) im Zentrum des Verbundkörpers (10), in dem ein elektrisch leitender Wickelkern (50) angeordnet ist. Der Wickelverbundkörper (10) ist in einem zylindrischen Gehäuse (60) mit einem Boden (61) und einem Deckel (62) angeordnet, derart, dass die Stirnseiten (34, 36) in Richtung des Bodens (61) und des Deckels (62) weisen. Das Energiespeicherelement (12) umfasst weiter elektrisch leitende Kontaktelemente (70, 80), die flach auf den Stirnseiten (34, 36) aufliegen.

Es wird vorgeschlagen, dass der Wickelkern (50) derart ausgebildet und/oder angeordnet ist, dass er bei axialer Deformation des Gehäuses (60) das erste elektrisch leitendes Kontaktelement (70) und das zweite elektrisch leitende Kontaktelement (80) elektrisch verbindet.

## Beschreibung

### ANWENDUNGSGEBIET UND STAND DER TECHNIK

Die vorliegende Erfindung betrifft ein elektrochemisches Energiespeicherelement mit einem zylindrischen Gehäuse und einem hohlzylindrisch geformten Wickelverbundkörper.

Die einfachste Form eines elektrochemischen Energiespeicherelements ist die elektrochemische Energiespeicherzelle. Unter einer elektrochemischen Energiespeicherzelle im Sinne der vorliegenden Anmeldung wird eine elektrochemische Zelle verstanden, die mindestens eine positive und mindestens eine negative Elektrode, welche über einen ionenleitenden Elektrolyten miteinander verbunden sind, umfasst. In einer solchen Energiespeicherzelle findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Die räumliche Trennung wird dabei oft von einem zwischen den Elektroden angeordneten Separator gewährleistet.

Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb der elektrochemischen Zelle. Dieser wird durch den ionenleitenden Elektrolyten gewährleistet.

In sekundären (wieder aufladbaren) elektrochemischen Energiespeicherzellen ist die Entladereaktion reversibel, es besteht also die Möglichkeit, die bei der Entladung erfolgte Umwandlung chemischer Energie in elektrische Energie umzukehren.

Werden im Zusammenhang mit sekundären elektrochemischen Energiespeicherzellen die Begriffe "Anode" und "Kathode" benutzt, benennt man die Elektroden in der Regel entsprechend ihrer Entladefunktion. Die negative Elektrode in solchen Zellen ist also die Anode, die positive Elektrode die Kathode.

Ein elektrochemisches Energiespeicherelement kann genau eine elektrochemische Energiespeicherzelle umfassen. Es kann aber auch zwei oder mehr Zellen umfassen, die bevorzugt elektrisch in Reihe oder elektrisch parallel geschaltet sind.

Oftmals werden in Energiespeicherelementen die Elektroden und Separatoren in Form von Verbundkörpern bereitgestellt. Bei einem solchen Verbundkörper kann es sich um einen Zellenstapel (stack), aus mehreren Zellen handeln. Meist weist der Verbundkörper aber eine Struktur aus gewickelten Elektroden und Separatoren auf (Wickelverbundkörper).

Bei elektrochemischen Energiespeicherelementen sind zylindrische Bauformen weit verbreitet, wobei sich in der Regel die Elektroden als Bestandteil eines hohlzylindrischen Wickelverbundkörpers im Innenraum eines zylindrischen Gehäuses befinden, beispielsweise mit dem Formfaktor 21 x 70 (Durchmesser mal Höhe in mm). Insbesondere kann es sich hierbei um zylindrische Rundzellen handeln.

Für Anwendungen im Automobilbereich, für E-Bikes oder auch für andere Anwendungen mit hohem Energiebedarf, wie z.B. in elektrischen Werkzeugen, werden bevorzugt Lithium-Ionen-Zellen mit möglichst hoher Energiedichte eingesetzt, die gleichzeitig in der Lage sind, mit hohen Strömen beim Laden und Entladen belastet zu werden. Moderne Lithium-Ionen-Zellen dieses Formfaktors können eine Energiedichte von bis zu 300 Wh/kg erreichen.

Problematisch an elektrochemischen Energiespeicherelementen mit sehr hoher Energiedichte ist, dass beispielsweise bei einem elektrischen Kurzschluss derart hohe Ströme auftreten können, dass eine starke thermische Dynamik entsteht. Dadurch können die chemischen Materialien der Zelle, vor allem der Elektrolyt, schlagartig verdampfen, wodurch sogar das Gehäuse des Energiespeicherelements platzen kann. Häufig kommt es zu einem kontrollierten Druckausgleich, indem beispielsweise ein PRV (Pressure Reducing Valve) auslöst. Dies verhindert ein unkontrolliertes Platzen des Zellgehäuses, ungeachtet dessen kann in der Folge Luftsauerstoff in die Zelle eindringen, was die Brandgefahr fördert. All dies kann ein erhebliches Sicherheitsrisiko darstellen.

Besagter Kurzschluss kann beispielsweise in Folge eine mechanischen Deformation eines Zellgehäuses auftreten.

### AUFGABE UND LÖSUNG

Die Erfindung stellt sich demgegenüber die Aufgabe, ein verbessertes Energiespeicherelement bereitzustellen, das die genannten Probleme adressiert. Insbesondere soll das Energiespeicherelement hinsichtlich seiner Sicherheitseigenschaften verbessert sein.

Diese Aufgabe wird durch das elektrochemische Energiespeicherelement mit den Merkmalen des Anspruchs 1 gelöst.

Das erfindungsgemäße Energiespeicherelement weist danach die folgenden Merkmale auf:
a) Das Energiespeicherelement weist einen hohlzylindrisch geformten Wickelverbundkörper auf, der eine spiralförmige Struktur aus mindestens zwei spiralförmig um eine Wickelachse gewickelten Elektrodenbändern und mindestens einem zwischen den Elektrodenbändern angeordneten Separatorband aufweist.
b) Der hohlzylindrisch geformte Wickelverbundkörper umfasst zwei endständige Stirnseiten, eine umlaufende äußere Verbundkörpermantelfläche und einen axial ausgerichteten Hohlraum im Zentrum des Wickelverbundkörpers.
c) In dem axial ausgerichteten Hohlraum ist ein Wickelkern angeordnet, bevorzugt mit im Wesentlichen zylindrischer oder hohlzylindrischer Form.
d) Der Wickelverbundkörper ist in einem zylindrischen Gehäuse mit einem Boden und einem Deckel angeordnet, derart, dass die Stirnseiten in Richtung des Bodens und des Deckels weisen.
e) Das Energiespeicherelement umfasst ein erstes elektrisch leitendes Kontaktelement, das flach auf der Stirnseite des Wickelverbundkörpers aufliegt und in unmittelbarem Kontakt mit einem ersten der Elektrodenbänder steht.
f) Das Energiespeicherelement umfasst ein zweites elektrisch leitendes Kontaktelement, das flach auf der Stirnseite des Wickelverbundkörpers aufliegt und in unmittelbarem Kontakt mit einem zweiten der Elektrodenbänder steht, das eine zum ersten Elektrodenband umgekehrte Polarität hat.

Besonders zeichnet sich das Energiespeicherelement dadurch aus, dass
g) der Wickelkern elektrisch leitend ausgebildet ist, und
h) der Wickelkern derart ausgebildet und/oder angeordnet ist, dass er bei axialer Deformation des Gehäuses das erste elektrisch leitendes Kontaktelement und das zweite elektrisch leitende Kontaktelement elektrisch verbindet.

Die Erfinder haben erkannt, dass durch einen elektrisch leitenden Wickelkern verhindert werden kann, dass ein Energiespeicherelement obiger Bauform in Folge einer axialen Deformation in einen unkontrollierbaren Zustand geraten kann. Über den Wickelkern kann eine gezielte Entladung des Energiespeicherelements erfolgen. Hierdurch kann in vielen Fällen das Auslösen eines PRV-Ventils und damit das Eindringen von Luftsauerstoff in das Energiespeicherelement vermieden werden. Dies erhöht die Sicherheit des Energiespeicherelements.

Wickelkerne (auch Mandrels genannt) werden klassisch verwendet, um einen Kollaps von Wickelverbundkörpern in einen axialen Hohlraum zu verhindern. Die Wickelkerne werden entweder als Teil des Wickelprozesses bereits von Anfang an mit eingewickelt oder nachträglich eingeschoben. Meist bestehen Wickelkerne aus einem polymerbasierten Material.

Ein Energiespeicherelement mit einem verbesserten Wickelkern ist beispielsweise aus der EP 3 945 617 A1 bekannt.

Bevorzugt ist das erfindungsgemäße elektrochemische Energiespeicherelement eine elektrochemische Energiespeicherzelle.

Die mindestens zwei spiralförmig um eine Wickelachse gewickelten Elektrodenbändern umfassen mindestens ein positives Elektrodenband, bei dem ein metallischer Stromkollektor (der Kathodenstromkollektor) mit einem positiven Elektrodenmaterial beschichtet ist, und mindestens ein negatives Elektrodenband, bei dem ein metallischer Stromkollektor (der Anodenstromkollektor) mit einem negativen Elektrodenmaterial beschichtet ist

Insbesondere auf Strombelastbarkeit ausgelegte Energiespeicherelemente können Kontaktelemente zum Kontaktieren der Elektrodenbänder an der Stirnseite des Wickelverbundkörpers aufweisen. Solche Energiespeicherelemente sind beispielsweise aus der WO 2021/239492 A1 oder der WO 2017/215900 A1 bekannt. Sie umfassen Wickelverbundkörper, bei denen die Elektrodenbänder metallische Stromkollektoren mit unbeschichteten Längsrändern aufweisen, welche an den Stirnseiten des Wickels aus dem Wickel herausragen. Dort können metallische Kontaktelemente, beispielsweise in Form einer Metallscheibe, auf die Längsränder aufgeschweißt werden. Dadurch ist es möglich, die Stromkollektoren und damit auch die dazugehörigen Elektrodenbänder über ihre gesamte Länge elektrisch zu kontaktieren. Dies senkt den Innenwiderstand innerhalb der Energiespeicherelemente sehr deutlich. Das Auftreten großer Ströme kann in der Folge sehr viel besser abgefangen und auch Wärme kann besser aus dem Wickel abgeführt werden.

Dies ist auch im Rahmen der vorliegenden Erfindung bevorzugt. In bevorzugten Ausführungsbeispielen zeichnet sich das Energiespeicherelement entsprechend durch mindestens eines der folgenden Merkmale a) bis d) aus.
a) Die Kontaktelemente weisen jeweils plane Kontaktflächen auf, mit denen sie auf den Stirnseiten aufliegen.
b) Die Kontaktflächen bedecken mindestens 20 %, bevorzugt mindestens 40 %, weiter bevorzugt mindestens 60 %, insbesondere mindestens 80 %, der jeweiligen Stirnseite.
c) Die Kontaktflächen des ersten Kontaktelements und des zweiten Kontaktelements sind parallel zueinander ausgerichtet.
d) Die Kontaktflächen erstrecken sich über die Zentren der Stirnseiten, wo sich Eintritts- bzw. Austrittsöffnungen des axialen Hohlraums finden.

Die Stromkollektoren der Elektrodenbänder liegen bevorzugt unmittelbar an den Kontaktflächen an. Bevorzugt sind sie an den Kontaktflächen mittels Verschweißung fixiert.

Beispielsweise besteht ein mit dem Anodenstromkollektor elektrisch verbundenes Kontaktelement aus Nickel oder Kupfer oder Titan oder einer Nickel- oder Kupfer- oder Titanlegierung oder Edelstahl. Ein mit dem Kathodenstromkollektor elektrisch verbundenes Kontaktelement besteht beispielsweise aus Aluminium oder einer Aluminiumlegierung.

Besonders bevorzugt zeichnen sich die Kontaktelemente durch eine bevorzugt gleichmäßige Dicke im Bereich von 50 µm bis 600 µm, bevorzugt im Bereich von 150 µm bis 350 µm, aus.

Die möglichst großflächige Abdeckung der Stirnseite ist für das thermische Management des Energiespeicherelements von Bedeutung. Je größer die Abdeckung ist, desto eher ist es möglich, möglichst lange Abschnitte der Längsränder der Stromkollektoren zu kontaktieren. Im Wickelverbundkörper gebildete Wärme kann so gut über das Kontaktelement abgeführt werden.

Es hat sich in einigen Ausführungsformen als vorteilhaft erwiesen, die Längsränder der Stromkollektoren einer Vorbehandlung zu unterziehen, bevor das Kontaktelement aufgesetzt wird.

Die Längsränder der Stromkollektoren können auch durch eine Vorbehandlung einer gerichteten Umformung unterzogen worden sein. Beispielsweise können sie in eine definierte Richtung umgebogen sein. Weiterhin können die Längsränder auch ungerichtet deformiert sein, beispielsweise in Folge eines Aufpressens der Kontaktelemente auf die Stirnseiten.

In einigen bevorzugten Ausführungsformen kann der Boden des zylindrischen Gehäuses als Kontaktelement dienen. In diesem Fall ist ein aus der auf dem Boden aufsitzenden Stirnseite des Wickelverbundkörpers austretender Stromkollektorrand bevorzugt unmittelbar mit dem Boden verschweißt.

Der Wickelkern zeichnet sich bevorzugt durch das folgende Merkmal aus:
a) Der Wickelkern weist eine Länge auf, die 90 % bis 99 %, bevorzugt 95 % bis 99 %, des Abstands zwischen den Kontaktflächen des ersten Kontaktelements und des zweiten Kontaktelements beträgt.

Dies bedeutet im Umkehrschluss, dass die gezielte Entladung des Energiespeicherelements ausgelöst wird, wenn sich in Folge einer axialen Deformation der Abstand zwischen den Kontaktflächen um 1 % bis 10 % verringert.

In einer weiteren bevorzugten Ausführungsform zeichnet sich das Energiespeicherelement durch mindestens eines der folgenden Merkmale aus.
a) Das Gehäuse des Energiespeicherelements umfasst ein vorzugsweise metallisches, becherförmig ausgebildetes Gehäuseteil mit einem Boden und mit einer endständigen Öffnung, in welcher der Deckel fixiert ist.
b) Der Deckel weist einen Rand auf, der von einer elektrisch isolierenden Dichtung umgeben ist, die den Deckel elektrisch gegenüber dem becherförmig ausgebildeten Gehäuseteil isoliert.

Bei dem Boden des Gehäuses handelt es sich bevorzugt um den Boden des Gehäusebechers. Das Energiespeicherelement umfasst als Deckel bevorzugt eine mehrteilige Deckelbaugruppe, die Sicherheitsfunktionen wie PRV- und/oder CID-Funktionen (CID = Current Interrupt Device) beinhalten kann.

Bei der Herstellung des Energiespeicherelements wird beispielsweise auf Bördelungsverfahren zurückgegriffen, um das becherförmige Gehäuseteil mit dem Deckel zu verschließen. Dabei wird bei bereits eingesetztem Wickelverbundkörper der freie Endabschnitt des becherförmigen Gehäuseteils radial nach innen über einen Bereich des Deckels umgebogen.

In einer weiteren bevorzugten Ausführungsform zeichnet sich das Energiespeicherelement durch mindestens eines der folgenden Merkmale aus.
a) Der Wickelkern ist an eines der Kontaktelemente fixiert und von dem anderen der Kontaktelemente beabstandet.
b) Zwischen dem Wickelkern und dem beabstandeten Kontaktelement ist ein elektrischer Isolator angeordnet.
c) Der elektrische Isolator ist eine elektrische isolierende Schicht, insbesondere auf dem Kontaktelement oder auf der Oberfläche des Wickelkerns.
d) Der Wickelkern steht mit einer Seite der elektrisch isolierenden Schicht in Kontakt und das beabstandete Kontaktelement mit der anderen.

Es kann also bevorzugt sein, dass der Wickelkern an eines der Kontaktelemente fixiert ist, beispielsweise durch Verschweißung, und von dem anderen der Kontaktelemente lediglich durch eine elektrisch isolierenden Schicht getrennt ist, bei der es sich beispielsweise um eine dünne Kunststofffolie oder eine dünne Lackschicht handeln kann. Die Dicke der elektrisch isolierenden Schicht kann beispielsweise 10 µm bis 1 mm betragen. Bei einer axialen Deformation kann der Wickelkern die Schicht durchstoßen und dabei eine elektrische Verbindung zwischen den Kontaktelementen herstellen.

In weiteren Ausführungsformen kann der Wickelkern von dem anderen der Kontaktelemente lediglich räumlich getrennt sein, ohne ein separates Isoliermittel.

In einer weiteren bevorzugten Ausführungsform zeichnet sich das Energiespeicherelement durch mindestens eines der folgenden Merkmale aus.
a) Der Wickelkern besteht aus Kupfer oder aus Aluminium.
b) Der Wickelkern weist einen minimalen Leiterquerschnitt im Bereich von 0,5 mm² bis 8 mm² auf.

Bei dem Wickelkern kann es sich somit beispielsweise um ein hohlzylindrisches Röhrchen aus Kupfer oder Aluminium handeln.

Da der Wickelkern elektrisch leitend ausgebildet ist, muss gewährleistet sein, dass er in dem axialen Hohlraum nicht ungewollt einen Kurzschluss zwischen entgegengesetzt gepolten Elektrodenbänder herbeiführt. Zu diesem Zweck kann das Energiespeicherelement eines der folgenden Merkmale aufweisen:
a) Die Wand des axial ausgerichteten Hohlraums ist elektrisch isolierend ausgebildet.
b) Die der Wand des axial ausgerichteten Hohlraums zugewandte Außenseite des Wickelkern ist elektrisch isolierend ausgebildet.
c) Zwischen der Wand des axial ausgerichteten Hohlraums und der dieser

### KURZE BESCHREIBUNG DER ZEICHNUNG

Nachfolgend werden Ausführungsbeispiele der Erfindung anhand einer Zeichnung näher erläutert. Es zeigen
- Figur 1: eine schematische Skizze eines noch ungewickelten Elektrodenbandes, hier der Anode;
- Figur 2: eine schematische Skizze eines noch ungewickelten Elektrodenbandes, hier der Kathode;
- Figur 3: eine schematische Skizze einer versetzten Anordnung von Anode, Separator und Kathode im ungewickelten Zustand;
- Figur 4: eine perspektivische Ansicht eines Wickelverbundkörpers mit überstehendem Anodenstromkollektor oben und überstehendem Kathodenstromkollektor unten sowie einem Wickelkern im Inneren;
- Figur 5: eine schematische Skizze (Querschnitt) eines Wickelverbundkörpers eines erfindungsgemäßen Energiespeicherelements mit zwei Kontaktelementen auf den Stirnseiten, links undeformiert und rechts nach axialer Deformation.
- Figur 6: ein erfindungsgemäßes Energiespeicherelement mit dem in Figur 5 dargestellten Wickelverbundkörper.

### BESCHREIBUNG BEVORZUGTER AUSFÜHRUNGSBEISPIELE

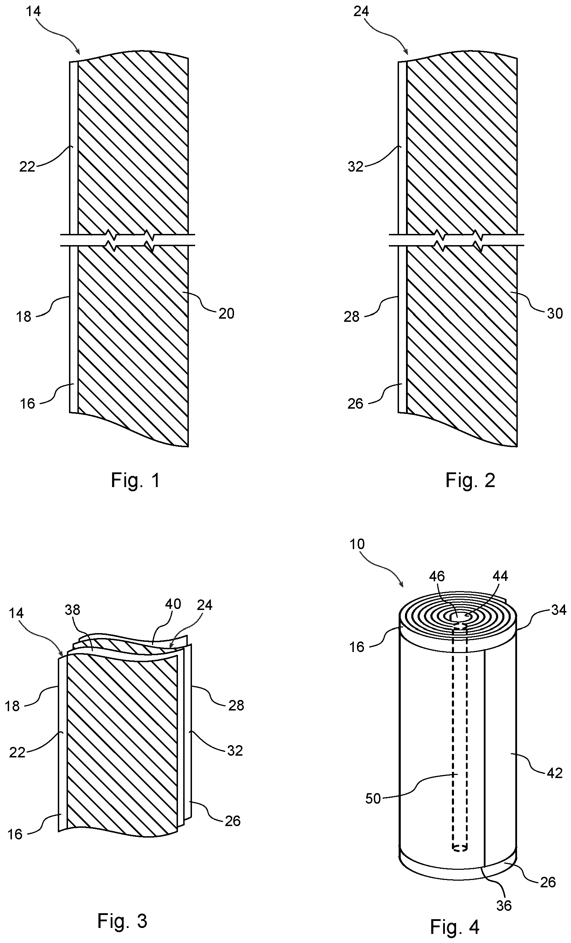

Die Figuren 1 bis 4 veranschaulichen den Aufbau eines Wickelverbundkörpers 10, der Bestandteil einer Energiespeicherzelle 12 (vgl. Figuren 11 bis 15) sein kann. Da die Beschreibung nur Ausführungsbeispiele mit nur einer elektrochemischen Energiespeicherzelle als erfindungsgemäßes Energiespeicherelement zeigen, wird im Folgenden stets der Begriff der Energiespeicherzelle verwendet.

Der Wickelverbundkörper 10 umfasst die in **Fig. 1** gezeigte, bandförmige Anode 14 mit dem bandförmigen Anodenstromkollektor 16, der einen ersten Längsrand 18 aufweist. Bei dem Anodenstromkollektor 16 handelt es sich um eine Folie aus Kupfer oder Nickel. Diese umfasst einen bandförmigen Hauptbereich, der mit einer Schicht aus negativem Elektrodenmaterial 20 beladen ist, sowie einen freien Randstreifen 22, der sich entlang des Längsrands 18 erstreckt und der nicht mit dem Elektrodenmaterial 20 beladen ist.

Weiterhin umfasst der Wickelverbundkörper 10 die in **Fig. 2** gezeigte, bandförmige Kathode 24 mit dem bandförmigen Kathodenstromkollektor 26, der einen zweiten Längsrand 28 aufweist. Bei dem Kathodenstromkollektor 26 handelt es sich um eine Aluminiumfolie. Er umfasst einen bandförmigen Hauptbereich, der mit einer Schicht aus positivem Elektrodenmaterial 30 beladen ist, sowie einen freien Randstreifen 32, der sich entlang des Längsrands 28 erstreckt und der nicht mit dem Elektrodenmaterial 30 beladen ist.

Beide Elektroden, die Anode 14 und die Kathode 24, sind zunächst einzeln in ungewickeltem Zustand dargestellt.

Die Anode 14 und die Kathode 24 sind innerhalb des Wickelverbundkörpers 10 derart versetzt zueinander angeordnet, dass der erste Längsrand 18 des Anodenstromkollektors 16 aus der ersten endständigen Stirnseite 34 und der zweite Längsrand 28 des Kathodenstromkollektors 26 aus der zweiten endständigen Stirnseite 36 des Wickelverbundkörper 10 austritt. Die versetzte Anordnung geht aus **Fig. 3** hervor.

Dort sind auch die zwei bandförmigen Separatoren 38 und 40 dargestellt, die im Wickelverbundkörper 10 die Anode 14 und die Kathode 24 voneinander trennen. Man spricht daher in diesem Zusammenhang auch oft von einem Elektroden-Separator-Verbund.

In **Fig. 4** ist der Wickelverbundkörper 10 in gewickelter Form dargestellt, wie er in einer erfindungsgemäßen Energiespeicherzelle 12 zum Einsatz kommen kann. Die aus den Stirnseiten 34 und 36 austretenden Anodenstrom- und Kathodenstromkollektoren 16 und 26 sind gut zu erkennen.

Häufig wird der Wickelverbundkörper 10 noch von einem Wickelmantel 42 umschlossen, beispielsweise von einer Kunststofffolie.

Wie man in Fig. 4 weiterhin erkennen kann, ist der Wickelverbundkörper 10 hohlzylindrisch geformt und hat eine umlaufende äußere Verbundkörpermantelfläche, entlang welcher im Wesentlichen der Wickelmantel 42 verläuft, und eine umlaufende innere Verbundkörpermantelfläche 44, die einen axial ausgerichteten Hohlraum 46 im Zentrum des Wickelverbundkörpers 10 definiert.

In dem Hohlraum 46 ist ein Wickelkern 50 angeordnet. Der Wickelkern 50 ist aus Metall gebildet. Je nach Herstellungsprozess kann der Wickelkern 50 vor dem Wickeln oder auch nach dem Wickeln des Wickelverbundkörpers 10 in dessen Inneren platziert werden.

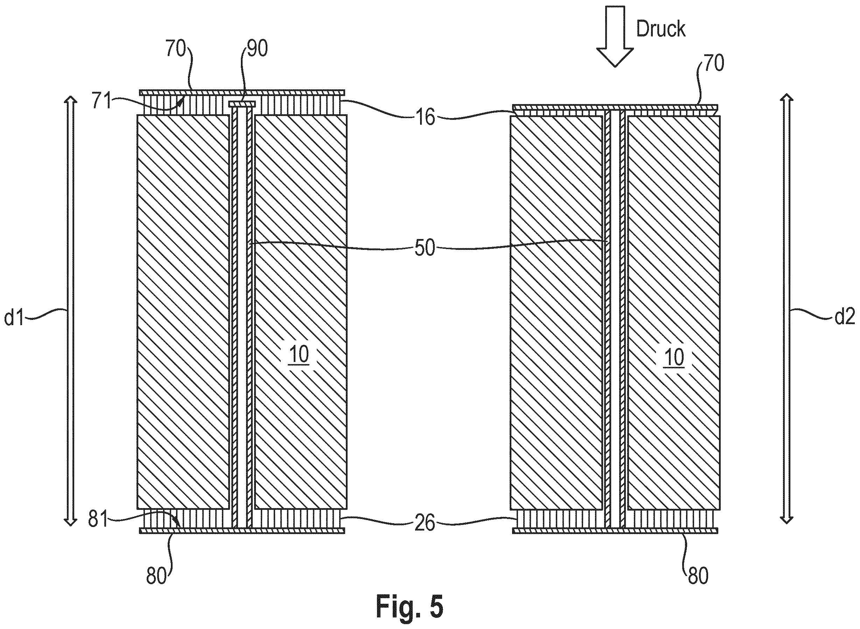

In **Fig. 5** ist ein Wickelverbundkörper 10 für ein erfindungsgemäßes Energiespeicherelement 12 dargestellt. Auf der oberen Stirnseite liegt flach das erste elektrisch leitende Kontaktelement 70 in Form einer Metallscheibe auf. Über den Stromkollektorrand 16 steht es in elektrischem Kontakt mit einem der Elektrodenbänder des Wickelverbundkörpers 10. Ein zweites elektrisch leitendes Kontaktelement 80 in Form einer Metallscheibe liegt flach auf der unteren Stirnseite des Wickelverbundkörpers 10 auf. Über den Stromkollektorrand 26 steht es in elektrischem Kontakt mit einem anderen der Elektrodenbänder des Wickelverbundkörpers 10. Die Kontaktelemente 70 und 80 weisen jeweils plane Kontaktflächen 71, 81 auf, mit denen sie auf den Stirnseiten aufliegen. Die Kontaktflächen 71, 81 sind parallel zueinander ausgerichtet, die Distanz zwischen den beiden Kontaktflächen ist d1.

Der Wickelkern 50 sitzt unmittelbar auf dem Kontaktelement 80 auf und ist an diesem fixiert, beispielsweise durch Verschweißung. Zum Kontaktelement 70 ist er hingegen beabstandet und durch den elektrischen Isolator 90 getrennt.

Im Falle einer axialen Deformation (rechtes Bild) verringert sich die Distanz zwischen den beiden Kontaktflächen 71, 81 auf d2. Der Wickelkern 50 durchsticht dabei den elektrischen Isolator 90 und verursacht einen Kurzschluss der Kontaktplatten 70, 80. Über den Wickelkern 50 kann dann eine kontrollierte Entladung erfolgen.

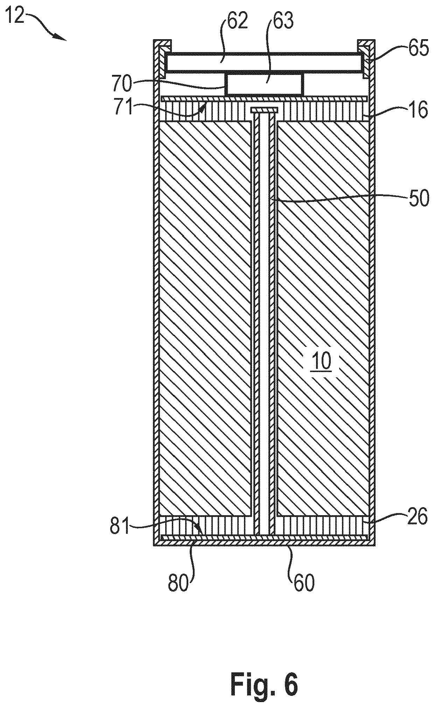

Das in **Fig.6** dargestellte Energiespeicherelement umfasst den in Figur 5 dargestellten Wickelverbundkörper. Dieser befindet sich in einem Gehäuse 60, das den Boden 61 und den Deckel 62 umfasst. Der Deckel 62 ist über den Stromleiter 63 elektrisch mit dem Kontaktelement 70 gekoppelt. Die Dichtung 65 isoliert den Deckel 62 gegenüber dem restlichen Gehäuse.

## Patentansprüche

1. Elektrochemisches Energiespeicherelement (12) mit den Merkmalen
a) das Energiespeicherelement (12) weist einen hohlzylindrisch geformten Wickelverbundkörper (10) auf, der eine spiralförmige Struktur aus mindestens zwei spiralförmig um eine Wickelachse gewickelten Elektrodenbändern (14, 24) und mindestens einem zwischen den Elektrodenbändern (14, 24) angeordneten Separatorband (38, 40) aufweist,
b) der hohlzylindrisch geformte Wickelverbundkörper (10) umfasst zwei endständige Stirnseiten (34, 36), eine umlaufende äußere Verbundkörpermantelfläche (42) und einen axial ausgerichteten Hohlraum (46) im Zentrum des Wickelverbundkörpers (10),
c) in dem axial ausgerichteten Hohlraum (46) ist ein Wickelkern (50) angeordnet, bevorzugt mit im Wesentlichen zylindrischer oder hohlzylindrischer Form,
d) der Wickelverbundkörper (10) ist in einem zylindrischen Gehäuse (60) mit einem Boden (61) und einem Deckel (62) angeordnet, derart, dass die Stirnseiten (34, 36) in Richtung des Bodens (61) und des Deckels (62) weisen,
e) das Energiespeicherelement (12) umfasst ein erstes elektrisch leitendes Kontaktelement (70), das flach auf der Stirnseite (34) des Wickelverbundkörpers (10) aufliegt und in unmittelbarem Kontakt mit einem ersten der Elektrodenbänder (14, 24) steht,
f) das Energiespeicherelement (12) umfasst ein zweites elektrisch leitendes Kontaktelement (80), das flach auf der Stirnseite (36) des Wickelverbundkörpers (10) aufliegt und in unmittelbarem Kontakt mit einem zweiten der Elektrodenbänder (14, 24) steht, das eine zum ersten Elektrodenband umgekehrte Polarität hat,
wobei
g) der Wickelkern (50) elektrisch leitend ausgebildet ist, und
h) der Wickelkern (50) derart ausgebildet und/oder angeordnet ist, dass er bei axialer Deformation des Gehäuses (60) das erste elektrisch leitendes Kontaktelement (70) und das zweite elektrisch leitende Kontaktelement (80) elektrisch verbindet.

2. Elektrochemisches Energiespeicherelement nach Anspruch 1 mit mindestens einem der folgenden zusätzlichen Merkmale:
a) Die Kontaktelemente (70, 80) weisen jeweils plane Kontaktflächen (71, 81) auf, mit denen sie auf den Stirnseiten (34, 36) aufliegen.
b) Die Kontaktflächen (71, 81) bedecken mindestens 20 %, bevorzugt mindestens 40 %, weiter bevorzugt mindestens 60 %, insbesondere mindestens 80 %, der jeweiligen Stirnseite (34, 36).
c) Die Kontaktflächen (71, 81) des ersten Kontaktelements (70) und des zweiten Kontaktelements (80) sind parallel zueinander ausgerichtet.
d) Die Kontaktflächen (71, 81) erstrecken sich über die Zentren der Stirnseiten (34, 36), wo sich Eintritts- bzw. Austrittsöffnungen des axialen Hohlraums (46) finden.

3. Elektrochemisches Energiespeicherelement nach Anspruch 2 mit dem folgenden zusätzlichen Merkmal:
a) Der Wickelkern (50) weist eine Länge auf, die 90 % bis 99 %, bevorzugt 95 % bis 99 %, des Abstands zwischen den Kontaktflächen (71, 81) des ersten Kontaktelements (70) und des zweiten Kontaktelements (80) beträgt.

4. Elektrochemisches Energiespeicherelement nach einem der Ansprüche 2 bis 4 mit mindestens einem der folgenden zusätzlichen Merkmale:
a) Der Wickelkern (50) ist an eines der Kontaktelemente (70, 80) fixiert und von dem anderen der Kontaktelemente (70, 80) beabstandet.
b) Zwischen dem Wickelkern (50) und dem beabstandeten Kontaktelement (70, 80) ist ein elektrischer Isolator (90) angeordnet.
c) Der elektrische Isolator (90) ist eine elektrische isolierende Schicht, insbesondere auf dem Kontaktelement (70, 80) oder auf einer Oberfläche des Wickelkerns (50).
d) Der Wickelkern (50) steht mit einer Seite der elektrisch isolierenden Schicht in Kontakt und das beabstandete Kontaktelement (70, 80) mit der anderen.

5. Elektrochemisches Energiespeicherelement nach einem der Ansprüche 2 bis 4 mit mindestens einem der folgenden zusätzlichen Merkmale:
a) Der Wickelkern (50) besteht aus Kupfer oder aus Aluminium.
b) Der Wickelkern (50) weist einen minimalen Leiterquerschnitt im Bereich von 0,5 mm² bis 8 mm² auf.

6. Elektrochemisches Energiespeicherelement nach einem der vorhergehenden Ansprüche mit mindestens einem der folgenden zusätzlichen Merkmale:
a) Die Wand des axial ausgerichteten Hohlraums (46) ist elektrisch isolierend ausgebildet.
b) Die der Wand des axial ausgerichteten Hohlraums (46) zugewandte Außenseite des Wickelkerns (50) ist elektrisch isolierend ausgebildet.
c) Zwischen der Wand des axial ausgerichteten Hohlraums (46) und der dieser zugewandten Außenseite des Wickelkerns (50) ist ein elektrischer Isolator angeordnet.
